# EUROPÄISCHE PATENTSCHRIFT

(11) **EP 2 790 497 B1**
(45) Veröffentlichungstag und Bekanntmachung des Hinweises auf die Patenterteilung: **18.05.2016**
(21) Anmeldenummer: 11801690.6
(22) Anmeldetag: 14.12.2011
(51) Int. Cl.: A01M 7/00

(54) **SYSTEM UND VERFAHREN ZUM AUSBRINGEN VON FLÜSSIGEN GEMISCHEN**
SYSTEM AND METHOD FOR APPLYING LIQUID MIXTURES
SYSTÈME ET PROCÉDÉ D'ÉPANDAGE DE MÉLANGES LIQUIDES

(43) Veröffentlichungstag der Anmeldung: 22.10.2014
(73) Patentinhaber: BASF SE, 67056 Ludwigshafen am Rhein (DE)
(72) Erfinder: WICHMANN, Wolf-Dieter, 17391 Neetzow (DE)
(74) Vertreter: BASF IP Association
(86) Internationale Anmeldenummer: PCT/EP2011/072802
(87) Internationale Veröffentlichungsnummer: WO 2013/087103

(56) Entgegenhaltungen:
- EP-A1- 0 086 029
- EP-A1- 2 084 964
- DE-A1-102009 026 234
- DE-U1- 9 402 611
- US-A- 4 373 669
- US-A- 4 895 303
- US-A1- 2004 035 949

## Beschreibung

Die vorliegende Erfindung betrifft ein System zum Ausbringen von flüssigen Gemischen gemäß Anspruch 1, ein Ausbringverfahren gemäß Anspruch 8 und die Verwendung des Systems gemäß Anspruch 1. Das System ist ausgestattet mit einer Hauptstromleitung zum Durchleiten eines Hauptstroms einer Trägerflüssigkeit, einer Nebenstromleitung, die bei einer ersten Verzweigung von der Hauptstromleitung abzweigt und bei einer zweiten Verzweigung in die Hauptstromleitung wieder einmündet, und zumindest einem Behälter zur Aufnahme einer Gemischkomponente, wobei der Behälter eine Entnahmeöffnung aufweist, die mit der Nebenstromleitung verbunden ist. Dabei umfasst der Behälter eine Dosierpumpe zum Fördern der in dem Behälter befindlichen Gemischkomponente durch die Entnahmeleitung in die Nebenstromleitung. Ferner umfasst das System eine Antriebseinheit, die lösbar mit der Dosierpumpe zum Antrieb der Dosierpumpe gekoppelt ist. Ferner betrifft die Erfindung ein Verfahren zum Ausbringen von flüssigen Gemischen. Das System bzw. das Verfahren sind insbesondere zum Ausbringen bzw. Versprühen von flüssigen Gemischen geeignet, die ein Pflanzenschutzmittel enthalten. In diesem Fall enthält die in dem Behälter aufgenommene Gemischkomponente einen Wirkstoff, insbesondere ein Pflanzenschutzmittel.

Es ist bekannt beim Ausbringen von Pflanzenschutzmitteln, insbesondere in der Landwirtschaft, zunächst eine Mischung von Wasser und einem Pflanzenschutzmittelkonzentrat in einem Brühebehälter zu erzeugen. Das in dem Brühebehälter befindliche verdünnte Pflanzenschutzmittel wird dann auf dem Feld mittels einer Pflanzenschutzspritze ausgebracht.

Des Weiteren ist es aus der US 5,737,221 bekannt, ein Pflanzenschutzmittel, welches sich in Granulatform in einem Behälter befindet direkt auf dem Feld dosiert auszubringen. Hierfür befindet sich im Boden des Behälters eine elektromechanisch betätigbare Dosiervorrichtung, welche die Abgabe des Pflanzenschutzmittels steuert.

Ferner sind Systeme mit einer sogenannten Direktdosierung oder Direkteinspritzung bekannt, bei welchen das Pflanzenschutzmittel aus einem Liefergebinde oder aus einem zum System gehörigen Vorratsbehälter angesaugt wird, bis zum Einspeiseort gefördert wird und schließlich in den Strom einer Trägerflüssigkeit eingespeist wird. Zur Förderung des Pflanzenschutzmittels kann dabei eine Dosierpumpe eingesetzt werden.

Bei solchen Dosiersystemen ist es außerdem bekannt, technische Einrichtungen einzusetzen, die nach dem Spritzvorgang den verbleibenden Flüssigkeitsinhalt des Systems in das Liefergebinde oder ein zum System gehörigen Vorratsbehälter zurückfördern, um unverdünnte Restmengen im System zu vermeiden.

Bei Systemen mit einer Direktdosierung ist es außerdem erforderlich, Dosierpumpen und andere Einrichtungen, die mit insbesondere konzentriertem Pflanzenschutzmittel in Kontakt kommen, zu spülen. Dabei ist es wichtig, dass die entstehende Spülbrühe nicht den Behälter mit dem Vorrat der Trägerflüssigkeit, d.h. insbesondere den Wasservorrat, kontaminiert.

Bekannte Systeme zu Direktdosierung von Pflanzenschutzmitteln, die in der Landwirtschaft eingesetzt werden, sind auf einer sogenannten Feldspritze montiert. Diese umfasst üblicherweise Dosierpumpen für jedes zu dosierende Pflanzenschutzmittel. Dabei ergibt sich das Problem, dass der auszubringende Volumenstrom des verdünnten Pflanzenschutzmittels sehr unterschiedlich sein kann. Der Volumenstrom im ackerbaulichen Pflanzenschutz kann sich von wenigstens 0,2 l/ha bis zu 5 l/ha über verschiedene Gestängebreiten von beispielsweise 18 m bis 36 m erstrecken. Die Arbeitsgeschwindigkeiten können dabei zwischen 3 km/h bis 15 km/h variieren. Um diesen Erfordernissen zu genügen, muss die Dosierpumpe bei herkömmlichen Systemen so ausgelegt sein, dass sie einen Volumenstrom von 0,08 l/min bis etwa 2,80 l/min dosieren kann. Hierfür sind sehr aufwendige Dosierpumpen erforderlich, die über mehrere Dosierbereiche verfügen. Aus diesem Grund werden bekannte Systeme zur Direktdosierung im Pflanzenschutz sehr komplex und technisch aufwendig.

Aus der EP 1 749 443 A1 ist ein landwirtschaftliches Spritzgerät zum Spritzen von Spritzmittel in der Form einer Trägerflüssigkeit, die mit mindestens einem Wirkstoff vermischt wird, bekannt. Das Spritzgerät umfasst einen Behälter zum Aufnehmen der Trägerflüssigkeit und einen Behälter zum Aufnehmen eines Wirkstoffs. Ferner umfasst das Spritzgerät eine Mischkammer zum Mischen der Trägerflüssigkeit mit dem Wirkstoff, um das Spritzmittel bereitzustellen. Es sind Verbindungsleitungen zum Einspeisen des jeweiligen Wirkstoffs in die Mischkammer und Verbindungsleitungen zum Einspeisen der Trägerflüssigkeit in die Mischkammer vorgesehen. Über einen Auslegeaufbau, der mit der Mischkammer verbunden ist, wird der mit der Trägerflüssigkeit vermischte Wirkstoff ausgestoßen. Damit auch Wirkstoffe, die nicht in flüssiger Form vorliegen, verwendet werden können, umfasst das Spritzgerät zusätzlich eine Anmischkammer, in welcher ein in granulierter oder pulvriger Form vorliegender Wirkstoff angemischt und in eine flüssige Form überführt wird.

Aus der DE 39 08 963 A1 ist ein Gerät zum Applizieren von Pflanzenbehandlungsmitteln unter geschwindigkeitsabhängiger Direkteinspeisung bekannt. Bei diesem Gerät wird die Verdünnungsflüssigkeit mittels einer Pumpe aus einem Vorratsbehälter in eine Mischkammer geleitet. Bei dieser Förderung der Verdünnungsflüssigkeit wird eine Druckregelung durchgeführt, sodass die Verdünnungsflüssigkeit unter konstantem Flüssigkeitsdruck der Mischkammer zugeführt wird. Gleichermaßen wird über eine Dosiervorrichtung ein Konzentrat eines Pflanzenbehandlungsmittels in die Mischkammer eingespritzt. Von der Mischkammer gelangt das Gemisch zu den Spritzdüsen eines Spritzgestänges.

Aus der DE 103 53 789 A1 ist ein Verfahren zur Direktdosierung eines Wirkstoffs einer Pflanzenschutzspritze bekannt. Das Verfahren zeichnet sich dadurch aus, dass der Wirkstoff der Trägerflüssigkeit direkt an den Düsenhaltern zudosiert wird.

Eine weitere Spritzvorrichtung zur Direktdosierung eines Pflanzenschutzmittels ist aus der DE 10 2006 045 450 B4 bekannt. Bei dieser Spritzvorrichtung wird mittels einer Dosierpumpe Wirkstoff über eine Wirkstoffeinspeiseleitung in eine Trägerflüssigkeitsleitung eingespeist, wobei im Bereich der Mündung der Wirkstoffeinspeiseleitung in die Trägerflüssigkeitsleitung in oder an der Wirkstoffeinspeiseleitung ein Sensor vorgesehen ist, der wenigstens das Vorhandensein von Fluid detektiert und ein entsprechendes Signal ausgibt.

Aus der US 2004/035 949 A1 ist eine Vorrichtung zum Versprühen von Insektiziden bekannt, wobei durch Entnehmen aus dem und Zurückführen in das Reservoir ein Mischeffekt erzielt wird.

Ferner beschreibt die DE 94 02 611 U1 ein landwirtschaftliches Spritzgerät zum Versprühen von in Wasser gelösten flüssigen Substanzen mit einem Flüssigkeitsvorratsbehälter, der über eine Zuführungspumpe mit einer Zuführungsleitung zu einer Verteilerarmatur verbunden ist und der Frischwasser enthält. Weiterhin weist das Spritzgerät ein Dosiergerät zum dosierten Einbringen der flüssigen Substanzen in Wasser auf. Dabei ist das Dosiergerät als proportionale Dosierpumpe ausgebildet. Die Dosierpumpe ist weiterhin in die Zuführungsleitung zwischen den Frischwasserbehälter und die Verteilerarmatur eingeschaltet.

Schließlich ist aus der DE 10 2006 045 449 A1 eine Spritzvorrichtung zum Versprühen von Spritzmitteln für den Pflanzenschutz bekannt, bei der eine Dosierpumpe zum Dosieren des Pflanzenschutzmittels und eine Mischvorrichtung eingesetzt werden. In der Mischvorrichtung wird die Trägerflüssigkeit mit dem Pflanzenschutzmittel vermischt. Sie umfasst eine Hauptstromleitung, eine Wirkstoffzuleitung und eine Mischkammer.

Dabei ist die Mischkammer in einer von der Hauptstromleitung abzweigenden und wieder in diese einmündenden Nebenstromleitung angeordnet.
Der vorliegenden Erfindung liegt die Aufgabe zugrunde, ein System und ein Verfahren der eingangs genannten Art bereitzustellen, mit denen die im Behälter befindliche Gemischkomponente sehr genau in die Hauptstromleitung eindosiert werden kann und die gleichermaßen kostengünstig realisiert werden können.
Erfindungsgemäß wird diese Aufgabe durch ein System mit den Merkmalen des Anspruchs 1 und ein Verfahren mit den Merkmalen des Anspruchs 8 gelöst. Vorteilhafte Ausgestaltungen und Weiterbildungen des erfindungsgemäßen Systems und des erfindungsgemäßen Verfahrens ergeben sich aus den abhängigen Ansprüchen.
Bei dem erfindungsgemäßen System der eingangs genannten Art ist die Dosierpumpe in den Behälter integriert. Die Antriebseinheit ist mit einer Steuereinheit datentechnisch gekoppelt. Mittels der Steuereinheit ist die dosierte Einspeisung der Gemischkomponente in den Nebenstrom steuerbar. Der Behälter weist einen Transponder auf, der einen Datenträger umfasst, auf dem Daten zum Dosiervolumen der Dosierpumpe und/oder zu der aufgenommenen Gemischkomponente gespeichert sind. Das System umfasst ferner einen mit der Steuereinheit gekoppelten Empfänger zum Empfangen der auf dem Datenträger gespeicherten Daten.
Bei dem erfindungsgemäßen System ist die Dosierpumpe in den Behälter integriert. Die Antriebseinheit ist hingegen unabhängig von der Dosierpumpe. Bei einem landwirtschaftlichen Einsatz kann sie beispielsweise Teil einer Feldspritze sein. Im Einsatz des Systems wird die Antriebseinheit mit der Dosierpumpe gekoppelt, sodass die von dem Behälter aufgenommene Gemischkomponente mittels der Dosierpumpe des Behälters direkt in den Trägerflüssigkeitsstrom eindosiert werden kann. Dabei wird die Gemischkomponente jedoch nicht in den Hauptstrom der Trägerflüssigkeit eindosiert, sondern in den Nebenstrom der Nebenstromleitung. Hierdurch kann eine besonders exakte Dosierung erreicht werden. Gleichzeitig kommen so gut wie keine Teile des von dem Behälter unabhängigen Systems mit der unverdünnten Gemischkomponente direkt in Berührung. Insbesondere ist es nicht erforderlich das System zu spülen, wenn ein Behälter mit einer anderen Gemischkomponente zum Einsatz kommt.

Bei dem Behälter handelt es sich insbesondere um ein wiederbefüllbares Wechselgebinde. Da die Dosierpumpe in den Behälter integriert ist, ist der Behälter selbstdosierend. Durch die Integration der Dosierpumpe in den Behälter kann die Dosierpumpe hinsichtlich ihres Fördervolumens exakt auf die empfohlene Aufwandmenge für die enthaltene Gemischkomponente ausgelegt werden. Es ist insbesondere nicht erforderlich, dass die Dosierpumpe über ein großes Spektrum verschiedener Volumenströme dosieren kann. Dies hat den Vorteil, dass eine kostengünstige einfache Dosierpumpe mit nur einem Dosierbereich eingesetzt werden kann.

Die Antriebseinheit ist mit einer Steuereinheit datentechnisch gekoppelt. Mittels der Steuereinheit ist die dosierte Einspeisung der Gemischkomponente in den Nebenstrom steuerbar. Um die Steuerung auf die in dem Behälter befindliche Gemischkomponente und die integrierte Dosierpumpe abzustimmen, umfasst der Behälter gemäß einer Weiterbildung des erfindungsgemäßen Systems einen Datenträger, auf dem Daten zum Dosiervolumen der Dosierpumpe und/oder zu der Gemischkomponente gespeichert sind. Die Datenspeicherung kann elektronisch oder auf andere Weise, z.B. mittels eines Codes, z.B. eines Codemusters oder eines Strichcodes erfolgen. Die Dosierpumpe wird insbesondere bereits bei der Befüllung im Werk entlüftet und kalibriert. Die Kalibrierungsdaten können dann auf dem Datenträger gespeichert werden.

Bei dem erfindungsgemäßen System weist der Behälter einen Transponder auf, der den Datenträger umfasst, auf dem Daten zum Dosiervolumen der Dosierpumpe und/oder zu der aufgenommenen Gemischkomponente gespeichert sind. Das System umfasst wiederum einen mit der Steuereinheit gekoppelten Empfänger zum Empfangen der auf dem Datenträger gespeicherten Daten. Auf diese Weise kann die Steuereinheit die Dosierpumpe in Abhängigkeit von den Kalibrierungsdaten der Dosierpumpe und/oder von der Art der in dem Behälter befindlichen Gemischkomponente steuern.

Gemäß einer Weiterbildung des erfindungsgemäßen Systems treibt die Antriebseinheit die Dosierpumpe hydraulisch an. Die Dosierpumpe ist insbesondere im Gebinde, d.h. im Behälter, mit einem direkten hydraulischen Antrieb ausgestattet. Dieser hydraulische Antrieb erfolgt jedoch von außen, insbesondere von einer Ausstattung, z.B. einer Feldspritze. Hierdurch werden der technische Aufwand und die daraus resultierenden Kosten für den Behälter bzw. das Wechselgebinde geringer.

Gemäß einer Ausgestaltung des erfindungsgemäßen Systems ist in der Nebenstromleitung stromabwärts oder bei der Einspeisung der Gemischkomponente in die Nebenstromleitung eine Nebenstrommischkammer angeordnet. Die Nebenstrommischkammer sorgt dafür, dass die eindosierte Gemischkomponente mit der Trägerflüssigkeit, welche durch die Nebenstromleitung strömt, vermischt wird, um die Mischung zu homogenisieren. Dies ist insbesondere dann wichtig, wenn die Förderung durch die Dosierpumpe des Behälters diskontinuierlich erfolgt. Dies ist beispielsweise dann der Fall, wenn es sich bei der Dosierpumpe um eine Kolbenpumpe handelt.

Das System kann ferner zumindest einen weiteren Behälter zur Aufnahme einer Gemischkomponente umfassen, die sich von der Gemischkomponente des ersten Behälters unterscheiden kann. Auch der weitere Behälter weist eine Entnahmeöffnung auf, die stromaufwärts oder bei der Nebenstrommischkammer mit der Nebenstromleitung verbunden ist. Auf diese Weise können verschiedene Gemischkomponenten in den Nebenstrom der Trägerflüssigkeit eindosiert werden, wobei die Nebenstrommischkammer für eine Homogenisierung des Gemisches sorgt.

In der Hauptstromleitung ist die zweite Verzweigung insbesondere stromabwärts der ersten Verzweigung angeordnet. Weiter stromabwärts der zweiten Verzweigung ist gemäß einer Weiterbildung des erfindungsgemäßen Systems in der Hauptstromleitung eine Hauptstrommischkammer angeordnet. Die Hauptstrommischkammer sorgt dafür, dass das über die Nebenstromleitung in die Hauptstromleitung eingespeiste Gemisch weiter durchmischt wird. Die Hauptstrommischkammer ist insbesondere unmittelbar vor der Ausbringöffnung für das flüssige Gemisch angeordnet. Beispielsweise können hierfür eine oder mehrere Düsen am Ende der Hauptstromleitung z. B. bei einem Spritzgestänge angeordnet sein.

Gemäß einer Weiterbildung des erfindungsgemäßen Systems weist dieses eine Fördereinheit zum Erzeugen des Hauptstroms der Trägerflüssigkeit auf. Dabei ist der Volumendurchsatz durch die Hauptstromleitung variierbar, z.B. in einem Bereich von 0,08 l/min bis etwa 2,80 l/min. Die Nebenstromleitung und/oder das Ventil sind hingegen so ausgebildet, dass der Volumendurchsatz der Trägerflüssigkeit durch die Nebenstromleitung unabhängig von dem Volumendurchsatz der Trägerflüssigkeit durch die Hauptstromleitung ist. Auf diese Weise kann erreicht werden, dass in der Nebenstromleitung immer derselbe Flüssigkeitsdruck herrscht. Die Einspeisung der Gemischkomponente erfolgt dann immer in den gleichen Volumendurchsatz der Trägerflüssigkeit und ist insbesondere unabhängig von dem Volumendurchsatz durch die Hauptstromleitung. Auf diese Weise kann die in dem Behälter integrierte Dosierpumpe genau auf die im Behälter enthaltene Gemischkomponente und auf einen bestimmten Förderdurchsatz abgestimmt werden. Dies hat den Vorteil, dass eine kostengünstige Dosierpumpe eingesetzt werden kann.

Um den Nebenstrom der Trägerflüssigkeit durch die Nebenstromleitung zu erzeugen, kann in der Hauptstromleitung zwischen der ersten und der zweiten Verzweigung ein Ventil, insbesondere ein Rückschlagventil, angeordnet sein.

Bei dem erfindungsgemäßen Verfahren wird ein Hauptstrom mit einer Trägerflüssigkeit erzeugt. Bei einer ersten Verzweigung wird ein Nebenstrom mit einem Teil der Trägerflüssigkeit von dem Hauptstrom abgezweigt und bei einer zweiten Verzweigung wieder in den Hauptstrom eingespeist. Eine Dosierpumpe, die von einem Behälter zur Aufnahme einer Gemischkomponente umfasst ist, wird durch eine lösbar mit der Dosierpumpe gekoppelte Antriebseinheit angetrieben. Der Behälter weist dabei einen Transponder auf, der einen Datenträger umfasst, auf dem Daten zum Dosiervolumen der Dosierpumpe und/oder zu der aufgenommenen Gemischkomponente gespeichert sind. Dabei ist die Antriebseinheit mit der Steuereinheit datentechnisch gekoppelt und die in dem Behälter befindliche Gemischkomponente wird in den Nebenstrom dosiert eingespeist, wobei die dosierte Einspeisung der Gemischkomponente in den Nebenstrom mittels der Steuereinheit gesteuert wird. Mit einem mit der Steuereinheit gekoppelten Empfänger werden die auf dem Datenträger gespeicherten Daten empfangen. Das Gemisch aus der Trägerflüssigkeit mit der Gemischkomponente wird anschließend in den Hauptstrom eingespeist. Der Hauptstrom wird dann mit dem Gemisch aus der Trägerflüssigkeit und der Gemischkomponente ausgebracht, z.B. ausgespritzt.

Das Verfahren kann insbesondere mittels des vorstehend beschriebenen Systems durchgeführt werden. Das Verfahren weist somit dieselben Vorteile wie das System auf.

Bei dem Verfahren wird insbesondere die Dosierpumpe von der Antriebseinheit hydraulisch angetrieben. Des Weiteren wird bevorzugt in den Nebenstrom stromabwärts oder bei der Einspeisung der Gemischkomponente das Gemisch in einer Nebenstrommischkammer homogenisiert.

Gemäß einer weiteren Ausgestaltung des erfindungsgemäßen Verfahrens ist der Volumendurchsatz der Trägerflüssigkeit durch die Nebenstromleitung unabhängig von dem Volumendurchsatz der Trägerflüssigkeit durch die Hauptstromleitung. Hierdurch erreicht man, dass die Gemischkomponente immer gegen denselben Flüssigkeitsdruck in den Nebenstrom eingespeist wird. Auf diese Weise kann die Dosiergenauigkeit erhöht werden.

Die Gemischkomponente des erfindungsgemäßen Verfahrens und des erfindungsgemäßen Systems enthält insbesondere einen Wirkstoff, bevorzugt ein Pflanzenschutzmittel. Als Trägerflüssigkeit kann beispielsweise Wasser verwendet werden. In diesem Fall wird somit ein flüssiges Gemisch aus Wasser und einem Pflanzenschutzmittel ausgebracht.

Die Erfindung betrifft des Weiteren die Verwendung des vorstehend beschriebenen Systems zum Ausbringen eines Gemisches, das ein Pflanzenschutzmittel enthält.

Das erfindungsgemäße System ist besonders für die Entnahme flüssiger Pflanzenschutzmittel geeignet. Das erfindungsgemäße System kann beispielsweise in Verbindung mit flüssigen Pflanzenschutzmitteln eingesetzt werden, die als EC, EW, SC, ME, SE oder OD formuliert sind. Diese Formulierungstypen sind dem Fachmann geläufig, und beispielsweise beschrieben in H. Mollet, A. Grubenmann "Formulation Technology", WILEY-VCH, Weinheim 2001, S. 389-397 und dort zitierte Literatur.

Unter einer EC versteht der Fachmann eine flüssige Pflanzenschutzmittel-Formulierung, in dem der bzw. die Pflanzenschutzwirkstoffe als homogene Lösung in einem mit Wasser nicht mischbaren organischen Lösungsmittel bzw. Lösungsmittelgemisch vorliegen, wobei die Lösung beim Verdünnen mit Wasser eine Emulsion ergibt.

Unter einer EW versteht der Fachmann eine flüssige PflanzenschutzmittelFormulierung, in dem der bzw. die Pflanzenschutzwirkstoffe in Form einer Öl-inWasser-Emulsion vorliegen, wobei wenigstens einer der Pflanzenschutzwirkstoffe in den Öltröpfchen vorliegt.

Unter einem SC versteht der Fachmann eine flüssige Pflanzenschutzmittel-Formulierung, in dem der bzw. die Pflanzenschutzwirkstoffe in Form von festen, feinteiligen Partikeln vorliegen, die in einer wässrigen kohärenten Phase suspendiert sind. Diese Formulierungen werden auch als Suspensionskonzentrate bezeichnet.

Unter einer ME versteht der Fachmann eine flüssige Pflanzenschutzmittel-Formulierung, in dem der bzw. die Pflanzenschutzwirkstoffe in Form einer Mikroemulsion vorliegen, wobei typischerweise wenigstens einer der Pflanzenschutzwirkstoffe typischerweise gelöst in der organischen Phase vorliegt.

Unter einem OD versteht der Fachmann eine flüssige Pflanzenschutzmittel-Formulierung, in dem der bzw. die Pflanzenschutzwirkstoffe in Form von festen, feinteiligen Partikeln vorliegen, die in einer nicht-wässrigen kohärenten Phase suspendiert sind. Diese Formulierungen werden auch als Öldispersionskonzentrate bezeichnet.

Unter einem SE versteht der Fachmann eine flüssige Pflanzenschutzmittel-Formulierung, in dem der bzw. die Pflanzenschutzwirkstoffe in Form von festen, feinteiligen Partikeln vorliegen, die in einer nicht-wässrigen flüssigen Phase suspendiert sind, die ihrerseits in einer wässrigen Phase emulgiert ist. Diese Formulierungen werden auch als Suspoemulsionskonzentrate bezeichnet.

Die vorgenannten Formulierungen enthalten neben einem oder mehreren, vorzugsweise organischen Pflanzenschutzwirkstoffen und wenigstens einem wässrigen oder nicht-wässrigen Verdünnungsmittel, in der Regel wenigstens eine oberflächenaktive Substanz, die häufig unter anionischen und nichtionischen Emulgatoren sowie unter anionischen und nichtionischen polymeren Dispergierhilfsmitteln ausgewählt ist und die der Bildung stabiler Suspensionen bzw. Emulsionen beim Verdünnen der Formulierung mit Wasser, sowie im Falle mehrphasiger flüssiger Formulierungen wie EW, SC, ME, OD oder SE, der Stabilisierung der Phasen dienen. Gegebenenfalls enthalten die Formulierungen sogenannte Adjuvantien, welche die Wirksamkeit der des bzw. der Pflanzenschutzmittel verbessern. Weiterhin enthalten die Formulierungen in der Regel ein oder mehrere Additive, wie Additive zur Modifizierung der rheologischen Eigenschaften, Frostschutzmittel, Farbmittel und Biozide in den für den jeweiligen Formulierungstyp üblichen Mengen.

Die Erfindung wird nun anhand eines Ausführungsbeispiels mit Bezug zu den Zeichnungen erläutert.

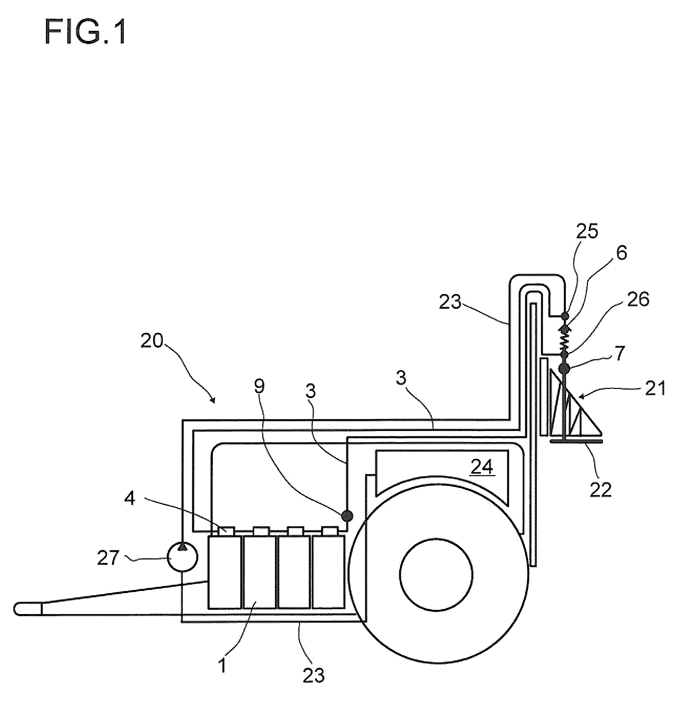

- Figur 1: zeigt den grundsätzlichen Aufbau eines Ausführungsbeispiels des erfindungsgemäßen Systems und
- Figur 2: zeigt den Aufbau des Ausführungsbeispiels des erfindungsgemäßen Systems im Detail.

Bei dem Ausführungsbeispiel handelt es sich um ein System zum Ausbringen eines Gemisches aus Wasser mit einem oder mehreren Pflanzenschutzmitteln. Das System umfasst eine sogenannte Feldspritze, die auf einem Anhänger 20 montiert ist, der beispielsweise mittels eines Traktors über ein landwirtschaftliches Feld gezogen werden kann.

Für das Wasser, welches die Trägerflüssigkeit darstellt, ist ein Vorratsbehälter 24 vorgesehen. Das Wasser wird mittels einer Pumpe 27 durch eine Hauptstromleitung 23 gepumpt. Dabei wird ein bestimmter Volumendurchsatz erzeugt, der über einen weiten Bereich variieren kann. Bei einer ersten Abzweigung 25 der Hauptstromleitung 23 zweigt eine Nebenstromleitung 3 von der Hauptstromleitung 23 ab. Die Nebenstromleitung 3 wird durch eine oder mehrer Feldspritzenausstattungen 4 geführt, wie es später erläutert wird. Bei den Feldspritzenausstattungen 4 sind als Wechselgewinde ausgebildete Behälter 1 an die Nebenstromleitung 3 lösbar angeschlossen.

Stromabwärts der Feldspritzenausstattung 4 ist eine Nebenstrommischkammer 9 in der Nebenstromleitung 3 angeordnet. Stromabwärts der Nebenstrommischkammer 9 mündet die Nebenstromleitung 3 wieder in die Hauptstromleitung 23 bei einer zweiten Verzweigung 26 ein. In der Hauptstromleitung 23 ist die zweite Verzweigung 26 stromabwärts von der ersten Verzweigung 25 angeordnet. Zwischen der ersten Verzweigung 25 und der zweiten Verzweigung 26 ist ein Nebenstromventil 6 angeordnet. Stromabwärts der zweiten Verzweigung 26 ist eine Hauptstrommischkammer 7 angeordnet. Diese ist auf einen Mittelteil eines Gestänges 21 des Anhängers 20 montiert. Schließlich mündet die Hauptstromleitung 23 in Düsen 22, die in verschiedenen Breiten an dem Gestänge 21 befestigt sein können.

Um das flüssige Gemisch auf dem Feld auszubringen, wird der Anhänger 20 über das Feld bewegt und das Pflanzenschutzmittel wird direkt in den Wasserstrom dosiert, der durch die Hauptstromleitung 23 fließt.

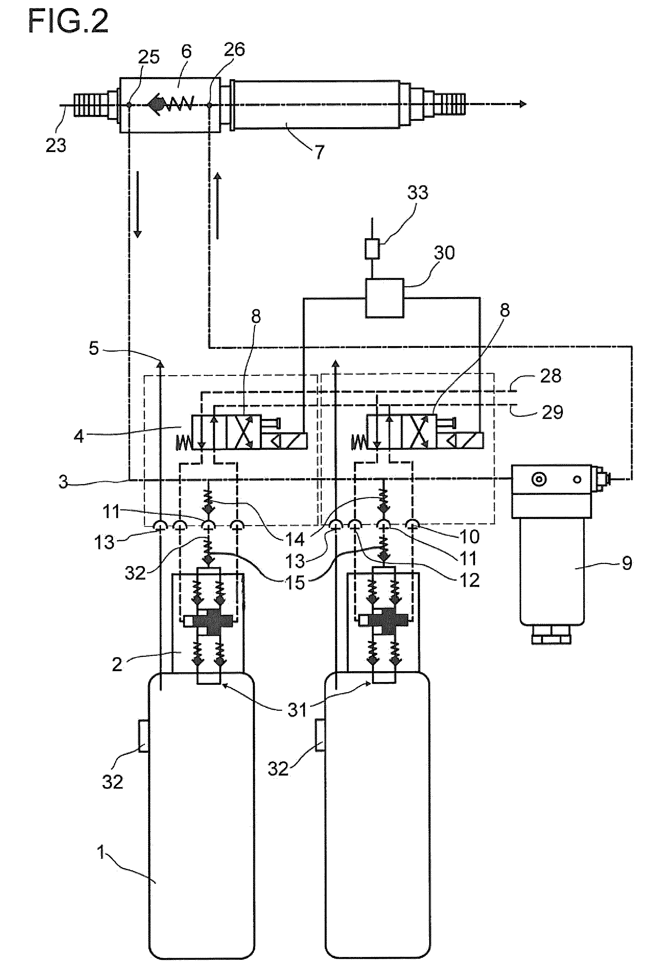

Das System und das dazugehörige Verfahren zum Ausbringen des Gemisches werden im Folgenden mit Bezug zur Figur 2 im Detail erläutert:
Der Hauptstrom mit dem Wasser gelangt über die Hauptstromleitung 23 zu der ersten Verzweigung 25. Stromabwärts der ersten Verzweigung 25 ist das Nebenstromventil 6 im Hauptstrom angeordnet. Dieses Nebenstromventil 6 ist im vorliegenden Ausführungsbeispiel als Rückschlagventil ausgebildet. Es erzeugt einen Druckabfall, dessen Größe von dem Öffnungsdruck des Rückschlagventils und dem Volumenstrom des Wassers in der Hauptstromleitung 23 abhängt. Durch das Nebenstromventil 6 wird ein Nebenstrom mit Wasser in die Nebenstromleitung 3 erzeugt. Der Querschnitt der Nebenstromleitung 3 und die Ausbildung des Rückschlagventils 6 sind so gewählt, dass bei einem im landwirtschaftlichen Bereich üblichen Durchsatz durch die Hauptstromieitung 23 ein Volumendurchsatz durch die Nebenstromleitung 3 erzeugt wird, welcher deutliche weniger variiert als die Variation des Volumendurchsatzes in der Hauptstromleitung 23. Bevorzugt variiert der Volumendurchsatz in der Nebenstromleitung 3 kaum oder überhaupt nicht. Der Volumendurchsatz durch die Nebenstromleitung 3 ist somit insbesondere unabhängig von dem Volumendurchsatz in der Hauptstromleitung 23.

Die Variation des Hauptstroms wird durch verschiedene gewünschte Ausbringmengen, unterschiedliche Gestängebreiten, auf denen die Spritzdüsen 22 montiert sind, und verschiedene Arbeitsgeschwindigkeiten erzeugt. Beispielsweise kann die Variation des Volumendurchsatzes des Hauptstroms in einem Bereich von etwa 6 l/min bis etwa 200 l/min liegen. Bei einer derartigen Variation ist eine zuverlässige Dosierung des Pflanzenschutzmittels in den Hauptstrom in Impulsen von Volumen von Pflanzenschutzmitteln sehr schwierig. Erfindungsgemäß erfolgt daher die gegebenenfalls impulsartige Einspeisung des Pflanzenschutzmittels in einen Nebenstrom in der Nebenstromleitung 3, bei dem der Volumendurchsatz des Wassers nicht so stark oder überhaupt nicht variiert.

Ferner wird in Abhängigkeit von dem Druckabfall hinter dem Nebenstromventil 6 und durch die Auswahl des Querschnitts der Nebenstromleitung 3 eine möglichst hohe Strömungsgeschwindigkeit im Nebenstrom eingestellt. Auf diese Weise kann der Nebenstrom dazu benutzt werden, um das hinzudosierte Pflanzenschutzmittel vom Standort des Behälters 1 zur zweiten Verzweigung 26 zu transportieren, die unter Umständen relativ weit entfernt auf dem Spritzgestänge des Anhängers 20 angeordnet ist. Außerdem übernimmt der Nebenstrom in der Nebenstromleitung 3 den Transport der eindosierten Pflanzenschutzmittel von der Position der Nebenstrommischkammer 9 zur Position der Hauptstrommischkammer 7.

Im Folgenden wird die Dosierung des in den Behältern 1 befindlichen Pflanzenschutzmittels in den Wasserstrom in der Nebenstromleitung 3 erläutert:
In Figur 2 sind zwei Anschlussstationen für zwei Behälter 1 gezeigt. Diese Darstellung ist nur beispielhaft. Es können insbesondere in der landwirtschaftlichen Praxis sehr viel mehr Anschlussstationen für Behälter 1 vorgesehen sein.

In die Behälter 1 ist eine Dosierpumpe 2 integriert. Die Dosierpumpe 2 ist beispielsweise als Doppelkolben-Dosierpumpe ausgebildet. Sie zeichnet sich durch einen einfachen und kostengünstigen Aufbau und eine hohe Zuverlässigkeit aus. Ferner umfasst der Behälter 1 ein Sicherheitsventil 15. Das Sicherheitsventil 15 ist an der von dem Behälter 1 abgewandten Seite der Dosierpumpe 2 angeordnet und verschließt den Anschluss des Behälters 1 immer dann zuverlässig, wenn der Behälter 1 nicht an einer Anschlussstation der Feldspritzenausstattung 4 angeschlossen ist. Der Behälter 1 weist eine Entnahmeöffnung 31 auf, die bei einem angeschlossenen Behälter 1 über die Dosierpumpe 2, das Sicherheitsventil 15, eine Entnahmeleitung 32 an einem Anschluss 11 der Feldspritzenausstattung 4 angeschlossen ist. Der lösbare Anschluss des Behälters 1 an die Feldspritzenausstattung 4 erfolgt über ein geeignetes Schnellkoppelungssystem. Derartige Schnellkoppelungssysteme sind an sich bekannt und in Figur 2 nicht dargestellt.

Des Weiteren ist über einen Anschluss 13 eine Entlüftungsleitung des Behälters 1 mit einer Entlüftungsleitung 5 der Feldspritzenausstattung 4 gekoppelt.

Die Dosierpumpe 2 wird hydraulisch mittels einer Antriebseinheit der Feldspritzenausstattung 4 angetrieben. Sie besitzt insbesondere keinen eigenen Antrieb, sondern wird extern angetrieben und gesteuert. Die Antriebseinheit umfasst ein Hydraulikventil 8 und Hydraulikleitungen 28 und 29. Im Betrieb ist die Dosierpumpe 2 des Behälters 1 über zwei Hydraulikanschlüsse 10 und 12 mit den Hydraulikleitungen 28, 29 der Antriebseinheit verbunden. Das Hydraulikventil 8 wird mittels einer Steuereinheit 30 elektronisch gesteuert, d.h. geöffnet und geschlossen. Auf diese Weise kann die Dosierpumpe 2 hydraulisch angetrieben werden und Pflanzenschutzmittel aus dem Behälter 1 in die Entnahmeleitung 32 zum Anschluss 11 impulsweise, d.h. diskontinuierlich, pumpen. Von dem Anschluss 11 gelangt das Pflanzenschutzmittel über ein Gegendruckventil 14 in den Wasserstrom in der Nebenstromleitung 3.

Das Gegendruckventil 14, durch welches das Pflanzenschutzmittel in die Nebenstromleitung 3 gelangt, ist so ausgebildet, dass es unabhängig vom vorhandenen Gegendruck im Nebenstrom der Nebenstromleitung 3 immer bei einem Druck von 10 bar öffnet. Auf diese Weise wird immer eine exakte Trennung zwischen dem Pflanzenschutzmittel und dem Wasser vor der Einspeisung des Pflanzenschutzmittels hergestellt. Es ist nur ein Fluss von Pflanzenschutzmittel in das Wasser in der Nebenstromleitung 3 möglich und niemals zurück in umgekehrter Richtung. Darüber hinaus stellt dieses Gegendruckventil 14 sicher, das die Dosierpumpe 2 im Behälter 1 immer gegen einen Druck von 10 bar fördert. Dadurch wird der Gegendruck als Einflussgröße auf das Impulsvolumen der Dosierpumpe 2 eliminiert.

Da die Doppelkolben-Dosierpumpe 2 in Impulsen fördert, ist stromabwärts der Einspeisung des Pflanzenschutzmittels in die Nebenstromleitung 3 eine Nebenstrommischkammer 9 vorgesehen. In der Nebenstrommischkammer 9 werden die impulsartig eindosierten Pflanzenschutzmittelvolumen in dem Wasserstrom gleichmäßig eingemischt und homogenisiert. Mittels der Nebenstrommischkammer 9 wird somit aus den Impulsen wenigstens eines Pflanzenschutzmittels und dem Wassernebenstrom in der Nebenstromleitung 3 eine homogene Mischung hergestellt.

Von der Nebenstrommischkammer 9 gelangt das homogene Gemisch nun als kontinuierlicher Dosierstrom zu der zweiten Verzweigung 26. Dort wird das Gemisch in den Hauptstrom des Wassers eingemischt. Um auch nach der Einmischung in den Hauptstrom eine Homogenisierung zu erreichen, ist stromabwärts der zweiten Verzweigung 26 eine Hauptstrommischkammer 7 vorgesehen.

Es sind somit zwei Mischkammern 7, 9 mit unterschiedlichen Aufgaben und bei unterschiedlichen Positionen in dem System angeordnet. Der Nebenstrom in der Nebenstromleitung 3 sorgt dabei für den Transport des Gemisches von der Nebenstrommischkammer 9 zur Hauptstrommischkammer 7.

Da zwei Mischkammern 7 und 9 vorgesehen sind, kann die Ausgestaltung der Hauptstrommischkammer 7 vereinfacht werden, da nur noch eine kontinuierlich zugeführte Konzentration in einen gegebenenfalls variierenden Hauptstrom eingemischt werden muss. Für die Hauptstrommischkammer 7 kann daher ein einfaches statisches Mischsystem eingesetzt werden, welches sehr kostengünstig ist.

Die Dosierpumpe 2 eines Behälters 1 wird bei der Befüllung des Behälters 1 mit dem Pflanzenschutzmittel im Werk des Pflanzenschutzmittelherstellers kalibriert. Bei der Befüllung des Behälters 1 wird gleichzeitig die Dosierpumpe 2 entlüftet. Die Kalibrierungsdaten werden auf einem Datenträger 32 gespeichert, welcher an dem Behälter 1 befestigt ist. Bei dem Datenträger 32 kann es sich insbesondere um einen als sogenannten Funkchip ausgebildeten Transponder handeln. Auf dem Datenträger 32 ist das bei der Kalibrierung ermittelte Impulsvolumen der Dosierpumpe 2 gespeichert. Ferner können Daten zu dem Pflanzenschutzmittel auf dem Datenträger 32 gespeichert sein, welches von dem Behälter 1 aufgenommen ist.

Wenn der Behälter 1 an die Feldspritzenausstattung 4 angeschlossen ist, werden die auf dem Datenträger 32 gespeicherten Daten an einen Empfänger 33 übertragen, weicher mit der Steuereinheit 30 gekoppelt ist. Auf diese Weise kann die Steuereinheit 30 das Hydraulikventil 8 und damit die Dosierpumpe 2 so steuern, dass sehr genau eine bestimmte Menge des Pflanzenschutzmittels von dem Behälter 1 in die Nebenstromleitung 3 dosiert eingespeist wird.

Das Ausführungsbeispiel des erfindungsgemäßen Systems wird wie folgt betrieben:
In den Vorratsbehälter 24 wird ein Wasservorrat eingefüllt. Ferner werden die Behälter 1 an die Feldspritzenausstattung 4 angeschlossen. Über den Empfänger 33 werden die auf den Datenträgern 32 gespeicherten Daten zu den Dosierpumpen 2 der Behälter 1 und zu den von den Behältern 1 aufgenommenen Pflanzenschutzmitteln ausgelesen und an die Steuereinheit 30 übertragen.

Der Anhänger 20 wird dann über das landwirtschaftliche Feld mit einer bestimmten Geschwindigkeit gezogen. Auch diese Geschwindigkeit wird an die Steuereinheit 30 übertragen.

Mittels der Pumpe 27 wird in der Hauptstromleitung 23 ein Wasserstrom mit einem bestimmten Volumendurchsatz erzeugt. Die Pumpe 27 kann dabei auch von der Steuereinheit 30 gesteuert werden. Der Nebenstrom in der Nebenstromleitung 3 wird wie vorstehend erläutert von dem Rückschlagventil 6 erzeugt. Der Hautstrom in der Hauptstromleitung 23 erzeugt zwar einen Druck, weicher das Rückschlagventil 6 öffnet und somit einen Hauptstrom zu den Düsen 22 erzeugt. Es ergibt sich jedoch ein Druckabfall, der dafür sorgt, dass ein Teil des Wassers des Hauptstroms durch die Nebenstromleitung 3 strömt.

Die Steuereinheit 30 steuert über die Hydraulikventile 8 die Dosierpumpen 2 der Behälter 1 so an, dass Pflanzenschutzmittel in Impulsen von den Behältern 1 über die Entnahmeleitungen 32 in die Nebenstromleitung 3 in der gewünschten Menge dosiert eingespeist werden. Die Menge des Pflanzenschutzmittels, die von den jeweiligen Behältern 1 in die Nebenstromleitung 3 eindosiert wird, wird dabei sehr genau von der Steuereinheit 30 gesteuert.

In der Nebenstrommischkammer 9 wird das Gemisch aus Wasser mit den eindosierten Pflanzenschutzmitteln homogenisiert und schließlich bei der zweiten Verzweigung 26 wieder in den Hauptstrom eingespeist. In der Hauptstrommischkammer 7 wird das Gemisch weiter homogenisiert und schließlich über die Düsen 22 auf das Feld ausgespritzt.

Das vorstehend beschriebene System und das vorstehend beschriebene Verfahren werden insbesondere mit den einleitend genannten Pflanzenschutzmitteln verwendet.

### Bezugszeichenliste

- 1: Behälter
- 2: Dosierpumpe
- 3: Nebenstromleitung
- 4: Feldspritzenausstattung
- 5: Entlüftungsleitung
- 6: Nebenstromventil
- 7: Hauptstrommischkammer
- 8: Hydraulikventil
- 9: Nebenstrommischkammer
- 10: Anschluss
- 11: Anschluss
- 12: Anschluss
- 13: Anschluss
- 14: Gegendruckventil
- 15: Sicherheitsventil
- 20: Anhänger
- 21: Gestänge
- 22: Düsen
- 23: Hauptstromleitung
- 24: Vorratsbehälter
- 25: erste Verzweigung
- 26: zweite Verzweigung
- 27: Pumpe
- 28: Hydraulikleitung
- 29: Hydraulikleitung
- 30: Steuereinheit
- 31: Entnahmeöffnung
- 32: Datenträger
- 33: Empfänger

## Patentansprüche

1. System zum Ausbringen von flüssigen Gemischen mit
- einer Hauptstromleitung (23) zum Durchleiten eines Hauptstroms einer Trägerflüssigkeit,
- einer Nebenstromleitung (3), die bei einer ersten Verzweigung (25) von der Hauptstromleitung (23) abzweigt und bei einer zweiten Verzweigung (26) in die Hauptstromleitung (23) wieder einmündet, und
- zumindest einem Behälter (1) zur Aufnahme einer Gemischkomponente, wobei der Behälter (1) eine Entnahmeöffnung (31) aufweist, die mit der Nebenstromleitung (3) verbunden ist, wobei der Behälter (1) eine Dosierpumpe (2) zum Fördern der in dem Behälter (1) befindlichen Gemischkomponente durch die Entnahmeleitung (32) in die Nebenstromleitung (3) umfasst und das System eine Antriebseinheit (8, 28, 29) umfasst, die lösbar mit der Dosierpumpe (2) zum Antrieb der Dosierpumpe (2) gekoppelt ist,
**dadurch gekennzeichnet, dass**
- die Dosierpumpe (2) in den Behälter (1) integriert ist,
- die Antriebseinheit (8, 28, 29) mit einer Steuereinheit (30) datentechnisch gekoppelt ist und mittels der Steuereinheit (30) die dosierte Einspeisung der Gemischkomponente in den Nebenstrom steuerbar ist und
- der Behälter (1) einen Transponder aufweist, der einen Datenträger (32) umfasst, auf dem Daten zum Dosiervolumen der Dosierpumpe (2) und/oder zu der aufgenommenen Gemischkomponente gespeichert sind, und das System einen mit der Steuereinheit (30) gekoppelten Empfänger (33) zum Empfangen der auf dem Datenträger (32) gespeicherten Daten umfasst.

2. System nach Anspruch 1,
**dadurch gekennzeichnet, dass** die Antriebseinheit (8, 28, 29) die Dosierpumpe (2) hydraulisch antreibt.

3. System nach Anspruch 1 oder 2,
**dadurch gekennzeichnet, dass** in der Nebenstromleitung (3) stromabwärts oder bei der Einspeisung der Gemischkomponente in die Nebenstromleitung (3) eine Nebenstrommischkammer (9) angeordnet ist.

4. System nach Anspruch 3,
**dadurch gekennzeichnet, dass** das System zumindest einen weiteren Behälter (1) zur Aufnahme einer Gemischkomponente umfasst, wobei der weitere Behälter (1) eine Entnahmeöffnung (31) aufweist, die stromaufwärts oder bei der Nebenstrommischkammer (9) mit der Nebenstromleitung (3) verbunden ist.

5. System nach einem der vorhergehenden Ansprüche,
**dadurch gekennzeichnet, dass** in der Hauptstromleitung (23) stromabwärts der zweiten Verzweigung (26) eine Hauptstrommischkammer (7) angeordnet ist.

6. System nach einem der vorhergehenden Ansprüche,
**dadurch gekennzeichnet, dass** in der Hauptstromleitung (23) zwischen der ersten und zweiten Verzweigung (25, 26) ein Ventil (6) angeordnet ist.

7. System nach einem der vorhergehenden Ansprüche,
**dadurch gekennzeichnet, dass** das System eine Fördereinheit (27) zum Erzeugen des Hauptstroms der Trägerflüssigkeit aufweist, wobei der Volumendurchsatz durch die Hauptstromleitung (23) variierbar ist, und dass die Nebenstromleitung (3) und/oder das Ventil (6) so ausgebildet ist/sind, dass der Volumendurchsatz der Trägerflüssigkeit durch die Nebenstromleitung (3) unabhängig von dem Volumendurchsatz der Trägerflüssigkeit durch die Hauptstromleitung (23) ist.

8. Verfahren zum Ausbringen von flüssigen Gemischen, bei dem
- ein Hauptstrom mit einer Trägerflüssigkeit erzeugt wird,
- bei einer ersten Verzweigung (25) ein Nebenstrom mit einem Teil der Trägerflüssigkeit von dem Hauptstrom abgezweigt wird und bei einer zweiten Verzweigung (26) wieder in den Hauptstrom eingespeist wird,
- eine Dosierpumpe (2), die von einem Behälter (1) zur Aufnahme einer Gemischkomponente umfasst ist, durch eine lösbar mit der Dosierpumpe (2) gekoppelte Antriebseinheit (8, 28, 29) angetrieben wird, wobei der Behälter (1) einen Transponder aufweist, der einen Datenträger (32) umfasst, auf dem Daten zum Dosiervolumen der Dosierpumpe (2) und/oder zu der aufgenommenen Gemischkomponente gespeichert sind, und wobei die Antriebseinheit (8, 28, 29) mit einer Steuereinheit (30) datentechnisch gekoppelt ist und die in dem Behälter (1) befindliche Gemischkomponente in den Nebenstrom dosiert eingespeist wird, wobei die dosierte Einspeisung der Gemischkomponente in den Nebenstrom mittels der Steuereinheit (30) gesteuert wird,
- mit einem mit der Steuereinheit (30) gekoppelten Empfänger (33) die auf dem Datenträger (32) gespeicherten Daten empfangen werden,
- das Gemisch aus der Trägerflüssigkeit mit der Gemischkomponente in den Hauptstrom eingespeist wird und
- der Hauptstrom mit dem Gemisch aus der Trägerflüssigkeit und der Gemischkomponente ausgebracht wird.

9. Verfahren nach Anspruch 8,
**dadurch gekennzeichnet, dass** die Dosierpumpe (2) von der Antriebseinheit (8, 28, 29) hydraulisch angetrieben wird.

10. Verfahren nach Anspruch 8 oder 9,
**dadurch gekennzeichnet, dass** in den Nebenstrom stromabwärts oder bei der Einspeisung der Gemischkomponente das Gemisch in einer Nebenstrommischkammer (9) homogenisiert wird.

11. Verfahren nach einem der Ansprüche 8 bis 10,
**dadurch gekennzeichnet, dass** der Volumendurchsatz der Trägerflüssigkeit durch die Nebenstromleitung (3) unabhängig von dem Volumendurchsatz der Trägerflüssigkeit durch die Hauptstromleitung (23) ist.

12. Verfahren nach einem der Ansprüche 8 bis 11,
**dadurch gekennzeichnet, dass** die Gemischkomponente einen Wirkstoff, insbesondere ein Pflanzenschutzmittel, enthält.

13. Verwendung des Systems nach einem der Ansprüche 1 bis 7 zum Ausbringen eines Gemisches, das ein Pflanzenschutzmittel enthält.

## Claims

1. A system for dispensing liquid mixtures, having
- a main stream line (23) for passage of a main stream of a carrier liquid,
- a secondary stream line (3), which branches off from the main stream line (23) at a first junction (25) and leads back into the main stream line (23) at a second junction (26), and
- at least one tank (1) for accommodating a mixture component, wherein the tank (1) comprises a discharge opening (31), which is connected to the secondary stream line (3), where the tank (1) comprises a metering pump (2) for delivering the mixture component located in the tank (1) through the discharge line (32) into the secondary stream line (3) and
the system comprises a drive unit (8, 28, 29), which is coupled detachably to the metering pump (2) to drive the metering pump (2),
**wherein**
- the metering pump (2) is integrated into the tank (1),
- the drive unit (8, 28, 29) has a data connection to a control unit (30) and the control unit (30) may control metered feed of the mixture component into the secondary stream, and
- the tank (1) comprises a transponder, which comprises a data storage medium (32), on which data relating to the metering volume of the metering pump (2) and/or to the mixture component accommodated are stored, and the system comprises a receiver (33) coupled to the control unit (30) for receiving the data stored on the data storage medium (32).

2. The system according to claim 1,
**wherein** the drive unit (8, 28, 29) drives the metering pump (2) hydraulically.

3. The system according to claim 1 or 2,
**wherein** a secondary stream mixing chamber (9) is arranged in the secondary stream line (3) downstream of or at the feed-in point of the mixture component into the secondary stream line (3).

4. The system according to claim 3,
**wherein** the system comprises at least one further tank (1) for accommodating a mixture component, the further tank (1) comprising a discharge opening (31), which is connected upstream of or at the secondary stream mixing chamber (9) to the secondary stream line (3).

5. The system according to one of the preceding
claims,
**wherein** a main stream mixing chamber (7) is arranged in the main stream line (23) downstream of the second junction (26).

6. The system according to one of the preceding claims,
**wherein** a valve (6) is arranged in the main stream line (23) between the first and second junctions (25, 26).

7. The system according to one of the preceding claims,
**wherein** the system comprises a delivery unit (27) for generating the main stream of carrier liquid, the volumetric flow rate through the main stream line (23) being variable, and wherein the secondary stream line (3) and/or the valve (6) is/are designed such that the volumetric flow rate of the carrier liquid through the secondary stream line (3) is independent of the volumetric flow rate of the carrier liquid through the main stream line (23).

8. A method for dispensing liquid mixtures, in which
- a main stream of a carrier liquid is produced,
- at a first junction (25) a secondary stream comprising part of the carrier liquid is branched off from the main stream and at a second junction (26) it is fed back into the main stream,
- a metering pump (2), included in a tank (1) for accommodating a mixture component, is driven by a drive unit (8, 28, 29) coupled detachably to the metering pump (2), where the tank (1) comprises a transponder, which comprises a data storage medium (32), on which data relating to the metering volume of the metering pump (2) and/or to the mixture component accommodated are stored, and where the drive unit (8, 28, 29) has a data connection to a control unit (30) and the mixture component located in the tank (1) is fed in a metered manner into the secondary stream, where the metered feed of the mixture component into the secondary stream is controlled by means of the control unit (30),
- the data stored on the data storage medium (32) are received by a receiver (33) coupled to the control unit (30),
- the mixture of carrier liquid and mixture component is fed into the main stream and
- the main stream, with the mixture of carrier liquid and mixture component, is dispensed.

9. The method according to claim 8,
**wherein** the metering pump (2) is driven hydraulically by the drive unit (8, 28, 29).

10. The method according to claim 8 or 9,
**wherein** in the secondary stream the mixture is homogenized in a secondary stream mixing chamber (9) downstream of or at the feed-in point of the mixture component.

11. The method according to one of claims 8 to 10,
**wherein** the volumetric flow rate of the carrier liquid through the secondary stream line (3) is independent of the volumetric flow rate of the carrier liquid through the main stream line (23).

12. The method according to one of claims 8 to 11,
**wherein** the mixture component comprises an active compound, in particular a plant protection product.

13. Use of the system according to one of claims 1 to 7 to dispense a mixture comprising a plant protection product.

## Revendications

1. Système d'épandage de mélanges liquides, comprenant :
- une conduite de courant principal (23) pour la conduite d'un courant principal d'un liquide vecteur,
- une conduite de courant secondaire (3), qui bifurque au niveau d'une première bifurcation (25) à partir de la conduite de courant principal (23) et débouche de nouveau dans la conduite de courant principal (23) au niveau d'une seconde ramification (26), et
- au moins un contenant (1) pour la réception d'un composant de mélange, le contenant (1) comprenant une ouverture de soutirage (31) qui est raccordée avec la conduite de courant secondaire (3), le contenant (1) comprenant une pompe de dosage (2) pour le transport du composant de mélange qui se trouve dans le contenant (1) par la conduite de soutirage (32) dans la conduite de courant secondaire (3), et le système comprenant une unité d'entraînement (8, 28, 29), qui est couplée de manière amovible avec la pompe de dosage (2) pour l'entraînement de la pompe de dosage (2),
**caractérisé en ce que**
- la pompe de dosage (2) est intégrée dans le contenant (1),
- l'unité d'entraînement (8, 28, 29) est couplée en termes de données avec une unité de commande (30) et l'introduction dosée du composant de mélange dans le courant secondaire peut être commandée par l'unité de commande (30), et
- le contenant (1) comprend un transpondeur qui comprend un support de données (32), dans lequel des données relatives au volume de dosage de la pompe de dosage (2) et/ou au composant de mélange contenu sont stockées, et le système comprend un récepteur (33) couplée avec l'unité de commande (30) pour la réception des données stockées dans le support de données (32).

2. Système selon la revendication 1, **caractérisé en ce que** l'unité d'entraînement (8, 28, 29) entraîne hydrauliquement la pompe de dosage (2).

3. Système selon la revendication 1 ou 2, **caractérisé en ce qu'**une chambre de mélange du courant secondaire (9) est agencée dans la conduite de courant secondaire (3) en aval ou au niveau de l'introduction du composant de mélange dans la conduite de courant secondaire (3).

4. Système selon la revendication 3, **caractérisé en ce que** le système comprend au moins un contenant supplémentaire (1) pour la réception d'un composant de mélange, le contenant supplémentaire (1) comprenant une ouverture de soutirage (31), qui est raccordée en amont ou au niveau de la chambre de mélange du courant secondaire (9) avec la conduite de courant secondaire (3).

5. Système selon l'une quelconque des revendications précédentes, **caractérisé en ce qu'**une chambre de mélange du courant principal (7) est agencée dans la conduite de courant principal (23) en aval de la seconde bifurcation (26).

6. Système selon l'une quelconque des revendications précédentes, **caractérisé en ce qu'**une vanne (6) est agencée dans la conduite de courant principal (23) entre la première et la seconde bifurcation (25, 26).

7. Système selon l'une quelconque des revendications précédentes, **caractérisé en ce que** le système comprend une unité de transport (27) pour la formation du courant principal du liquide vecteur, le débit volumique dans la conduite de courant principal (23) étant variable, et **en ce que** la conduite de courant secondaire (3) et/ou la vanne (6) sont configurées de sorte que le débit volumique du liquide vecteur dans la conduite de courant secondaire (3) soit indépendant du débit volumique du liquide vecteur dans la conduite de courant principal (23).

8. Procédé d'épandage de mélanges liquides, selon lequel
- un courant principal est formé avec un liquide vecteur,
- au niveau d'une première bifurcation (25), un courant secondaire comprenant une partie du liquide vecteur bifurque à partir du courant principal et, au niveau d'une seconde bifurcation (26), est réintroduit dans le courant principal,
- une pompe de dosage (2), qui est comprise par un contenant (1) pour la réception d'un composant de mélange, est entraînée par une unité d'entraînement (8, 28, 29) couplée de manière amovible avec la pompe de dosage (2), le contenant (1) comprenant un transpondeur qui comprend un support de données (32), dans lequel des données relatives au volume de dosage de la pompe de dosage (2) et/ou au composant de mélange contenu sont stockées, et l'unité d'entraînement (8, 28, 29) étant couplée en termes de données avec une unité de commande (30), et le composant de mélange qui se trouve dans le contenant (1) étant introduit sous forme dosée dans le courant secondaire, l'introduction dosée du composant de mélange dans le courant secondaire étant commandée par l'unité de commande (30),
- les données stockées dans le support de données (32) sont reçues par un récepteur (33) couplé avec l'unité de commande (30),
- le mélange du liquide vecteur avec le composant de mélange est introduit dans le courant principal, et
- le courant principal comprenant le mélange du liquide vecteur et du composant de mélange est épandu.

9. Procédé selon la revendication 8, **caractérisé en ce que** la pompe de dosage (2) est entraînée hydrauliquement par l'unité d'entraînement (8, 28, 29).

10. Procédé selon la revendication 8 ou 9, **caractérisé en ce que** le mélange est homogénéisé dans une chambre de mélange du courant secondaire (9) dans le courant secondaire en aval ou au niveau de l'introduction du composant de mélange.

11. Procédé selon l'une quelconque des revendications 8 à 10, **caractérisé en ce que** le débit volumique du liquide vecteur dans la conduite de courant secondaire (3) est indépendant du débit volumique du liquide vecteur dans la conduite de courant principal (23).

12. Procédé selon l'une quelconque des revendications 8 à 11, **caractérisé en ce que** le composant de mélange contient un agent actif, notamment un agent phytoprotecteur.

13. Utilisation du système selon l'une quelconque des revendications 1 à 7 pour l'épandage d'un mélange qui contient un agent phytoprotecteur.
